(19) Europäisches Patentamt
European Patent Office
Office européen des brevets

(11) Veröffentlichungsnummer: **0 081 729**
**B1**

(12) # EUROPÄISCHE PATENTSCHRIFT

(45) Veröffentlichungstag der Patentschrift: **29.07.87**

(21) Anmeldenummer: **82110969.1**

(22) Anmeldetag: **27.11.82**

(51) Int. Cl.$^4$: **C 08 G 18/65,** C 08 G 18/10, C 08 G 18/63, C 08 G 18/76, C 09 D 3/72

(54) **Verwendung flüssiger, kalthärtender polyurethanbildender Komponenten für korrosionshemmende, verschleissschützende Beschichtungen von Metall- und Kunststoffflächen und -formkörpern sowie von Gestein und Beton.**

(30) Priorität: **10.12.81 DE 3148838**

(43) Veröffentlichungstag der Anmeldung:
**22.06.83 Patentblatt 83/25**

(45) Bekanntmachung des Hinweises auf die Patenterteilung:
**29.07.87 Patentblatt 87/31**

(84) Benannte Vertragsstaaten:
**BE DE FR GB IT NL SE**

(56) Entgegenhaltungen:
**EP-A-0 019 232**
**EP-A-0 022 497**
**FR-A-2 334 728**
**FR-A-2 392 091**
**US-A-4 267 299**

(73) Patentinhaber: **BAYER AG**
**Konzernverwaltung RP Patentabteilung**
**D-5090 Leverkusen 1 Bayerwerk (DE)**

(72) Erfinder: **Trümmelmeyer, Gerhard**
**Samlandweg 4**
**D-5653 Leichlingen (DE)**
Erfinder: **Ruprecht, Hans-Dieter, Dr.**
**Andreas-Gryphius-Strasse 3**
**D-5000 Köln 80 (DE)**

**EP 0 081 729 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft die Verwendung spezieller Kombinationen von polyurethanbildenden Ausgangskomponenten, welche eine lösungsmittelfreie Verarbeitung von bei Raumtemperatur flüssigen Komponenten gestatten, die eine sehr schnelle Gelverfestigung zeigen, kalthärtend sind und sich hervorragend zum korrosionshemmenden Verschleichutz durch Gieß-, Schleuderguß- oder Sprühauftrag mittels Mehrkomponentendosieraggregaten auf großflächigen, auch senkrechten Mertallflächen und -formkörpern bzw. zur Innenauskleidung von Rohren, sowie zur elastischen Beschichtung von Kunststoffen, Schaumstoffen und natürlichem Gestein sowie von Estrichflächen oder Beton eignen.

Es handelt sich dabei um flüssige, relative niedrigviskose Mischungen von Polymerisat-o der Polyadditionsprodukthaltigen Polyprpylenoxidpolyolen und/oder Ethylenoxidhaltigen Polyprpylenoxidpolyolen mit einem Gehalt an speziellen, niedrigschmelzenden und gut löslichen aromatischen Diaminen und Tertiäramin-Katalysatoren als Komponent A), die mit flüssigen Polyisocyanaten, auf Diphenylmethandiisocyanat-Basis bzw. in Form ihrer NCO-Präpolymeren mit Polyetherpolyolen, als Komponente B) bei Raumtemperaturen umgesetzt werden.

An sich sind Gieß- und Sprühverfahren aus Polyurethanelastomer-bildenden Komponenten grundsätzlich bekannt, wobeidie Komponenten auch durch Hochdruck-Förderaggregate, gegebenenfalls intermittierend, dosiert werden. Entsprechende Verfahrensweisen sindi Vieweg/Höchtlen, Kunststoff-Handbuch, Band VII, Polyurethane, Carl Hanser Verlag 1966, auf den Seiten 121 bis 134, für Schaumstoffe auf den Seiten 135 bis 205 und speziell für Elastomere auf den Seiten 206 bis 247 beschrieben. Hiernach können Polyurethane auf Metalle mit guter Haftung aufgegossen werden, wobei jedoch häufig Schrumpfprobleme auftreten (S. 211—212). Als spezielle Verarbeitungsform für Glykol-verlängerte Elastomere ist das Sprühverfahren bekannt, bei dem z.B. Komponenten gleichzeitig vermischt und im gleichen Arbeitsgang verdüst werden. Hierzu muß man in der Regel noch einige Prozent hochwirksamer Katalysatoren wie Zinn-IV-dibutyl-dilaurat oder Zinn-II-octoat zusetzen. Diese hohen Mengen an Zinnkatalysatoren führen jedoch zu alterungsempfindlichen Elastomeren. Bei Verwendung von Polyethern werden mit aromatischen Diaminen als Kettenverlängerungsmittel günstigere Elastomereigenschaften als mit Diolen erzielt, jedoch sind auch hier höhere Temperaturen für das Aufschmelzen, Fördern und Dosieren der Komponenten sowie ein Nachheizen in Formen erforderlich (S. 224—228). Für Sprühverfahren zur Beschichtung senkrechter Flächen sind zur Verhinderung des Ablaufens der Komponenten relativ hohe Mengen höchstaktiver Zinnkatalysatoren erforderlich (vgl. S. 242 bis 244).

In der US—A—4 267 299 werden sprühbare, lösungsmittelfreie, zur Herstellung von Polyurethan(harnstoff)überzügen beschrieben, welche jedoch eine Verarbeitungstemperatur von etwa 71—94°C erfordern und trotzdem Gelzeiten von 2 bis 5 Minuten aufweisen.

Man hat auch schon in der DE—A 29 28 182 Gießelastomersysteme vorgeschlagen, welche eine verbesserte Verarbeitbarkeit besitzen, wenn man Diisocyanat-Isomerengemische aus 15 bis 80 Mol-% 2,4'-, 20 bis 85 Mol-% 4,4'- und 0 bis 20 Mol-% an 2,2'-Diisocyanato-diphenylmethanen verwendet. Man setzt dazu eine NCO-Präpolymer aus 1 Mol höhermolekularer Di- oder Polyhydroxyverbindung vom Molekulargewicht 400 bis 10 000 mit 2 bis 10 Mol de Diisocyanatodiphenylmethan-Isomerenmischungen mit einem aromatischen Diamin oder gegebenenfalls dessen Abmischungen mit höchstens 50 Mol-% eines primäre Hydroxylgruppen aufweisenden Polyols vom Molekulargewicht 62 bis 6000 µm, gießt in Formen, härtet das Reaktionsgemisch in der Form aus und entformt anschließend. Die Mitverwendung von anorganischen Füllstoffen oder auch organischen Füllstoffen, z.B. in Form von Styrol/Acrylnitrilgepfropften Polyethern oder Polyhydrazodicarbonamid-Dispersionen in Polyethern zur Verbesserung der mechanischen Eigenschaften wird beschrieben. Die Verwendung der Diphenylmethan-diisocyanat-Isomerengemsiche erleichtert bzw. ermöglicht das Vergießen auch auf Hochdruckmaschinen, da die Präpolymerviskosität herabgesetzt ist.

In der EP-A 19 232 der Anmelderin werden Verfahren zur Herstellung von nichtzelligen Polyurethan(harnstoff)elastomeren unter Verwendung eines Kettenverlängerergemischs, welches durch Formaldehyd-Kondensation zweier unterschiedlich alkylsubstiuierter Aniline hergestellt wurde, beschrieben. Die Polyurethan(harnstoff)-Bildung erfolgt nach Einstufen-, Prepolymer- oder Semiprepolymer-verfahren, wobei die Reaktionskomponenten in auf etwa 80° beheizte Formen eingemischt und längere Zeit, z.B. 12 Stunden bei 80°C,zur Bildung des Elastomeren ausgeheizt werden.

Allerdings sind die Komponenten in den letztgenannten Patentanmeldungen nicht derartig ausgewählt, daß sie ausschließlich bei Raumtemperatur oder darunter liegende Temperaturen, z.B. +10°C, dosiert werden können und daß sie auch ein kalthärtendes, nicht-schrumpfendes System darstellen.

In der US—PS 3 723 163 wird ein Verfahren zur Versiegelung von Beton (Stahlbeton) gegen vorhandene oder sich new bildende Risse beschrieben, indem man eine elastische, haftende Zwischenschicht aus einem feuchtigkeitshärtenden NCO-Präpolymer aufbringt und danach eine härtere, abriebfeste Polyurethanschicht aufbringt. Jede der Schichten kann weitere Polymere, wie Styrol, Indenharze, Teer oder andere enthalten. Das mehrstufige Verfahren ist zeitaufwendig, kompliziert und wetterabhängig.

In der DE—A 2 051 946 wird die Verwendung von bitumenhaltigen, füllstoffhaltigen, Polyurethanbildenden, kalthärtenden Komponenten zum Gieß- oder Sprühauftrag auf Unterlagen, u.a. auch Beton, beschrieben, doch zeigen diese Mischungen nicht die besondere Verarbeitbarkeit in flüssiger Form der

Ausgangsstoffe, verbunden mit Schnellhärtung auch an senkrechten Flächen und den günstigen Elastizitäts- und auch Hydrolyseeigenschaften.

Die Verwendung der erfindungsgemäß aufgefundenen Komponenten ermöglicht jedoch eine maschinengerechte Verarbeitung von ausschließlich niederviskosen, flüssigen Kmponenten bei Raumtemperatur oder auch darunter liegenden Temperaturen, wie sie z.B. auf Baustellen angetroffen werden, eine sehr schnelle Gelverfestigung der polyurethanbildenden Mischng, (so daß auch senkrechte Teile glatt gesprüht werden können), eine schnelle, kalthärtende (d.h. bei üblichen Raum- oder Lufttemperaturen) Polyurethanbildung, welche schrumpffrei oder sehr schrumpfarm erfolgt und keine hochaktivierenden Zinnkatalysatoren erfordert (welche andererseits das Alterungsverhalten verschlechtern). Die erfindungsgemäßen Materialien ergeben hydrolysenfeste und auch tieftemperaturelastische Polyurethane hoher Festigkeit und Abriebfestigkeit und sind durch ihre riß-, schwund- und schrumpffreie Ausbildung hervorragend zur korrosionshemmenden, verschleißschützenden Beschichtung von Metallflächen und -formkörpern (z.B. Rohrinnenverkleidungen) und zur elastischen Beschichtung von Estrich, (Stahl)beton und Gestein geeignet. Diese Polyurethankomposition ergibt auch hervorragende Bindungen zu bereits vorliegenden Beschichtungen oder Bindungen innerhalb von Mehrschichtensprühverfahren. Die Schichten können erfindungsgemäß auch relative dick aufgetragen werden, da die beanspruchte lösungsmittelfreie Komposition in Bruchteilen von Sekunden bis zu nur einigen Sekunden nach Austrag gelartig erstarrt und nicht nur an geneigten oder senkrechten Flächen, sondern auch über Kopf verarbeitet werden kann. Mit rotierenden Mischköpfen ist z.B. auch die Innenauskleidung von bereits verlegten Rohren mölich. Das Polyurethan verbindet sich festhaftend mit dem Untergrund. Die Abdichtung ist naht- nd fugenlos und überdeckt auch nachträglich auftretende Risse im Untergrund, so daß ein Unterwandern von Schadstoffen wie Wasser, Salzlösungen oder ähnlichem ausgeschlossen wird. Somit ist das erfindungsgemäße Verfahren hervorragend für die Abdichtung bei Ingenieurbauwerken gegen Feuchtigkeits-, Frost- und Tausalzeinwirkung geeignet und günstiger als andere Beschichtungssysteme.

Gegenstand der Erfindung ist somit die Verwendung von polyurethanbildenden Komponenten zum Aufbau hydrolysenfester, tieftemperaturbeständiger und elastischer Polyetherurethane hoher Festigkeit und Abriebfestigkeit zur korrosionshemmenden, verschleißschützenden Beschichtun von Metall- und Kunststoff-flächen und -formkörpern sowie Mauerwerk, Estrich, Stahlbeton und natürlichem Gestein durch Gieß oder Sprühauftrag der polyurethanbildenden Komponenten mittels Mehrkomponenten-Dosier- und -Mischaggregaten, dadurch gekennzeichnet, daß man als kalt zu verarbeitende, kalthärtende, schnell gelierende, lösungsmittelfreie, flüssige polyurethanbildende Kompnenten eine Polyol/Polyamin/tert.-Aminkatalysator-Komponente A) und eine Polyisocyanat-Komponente B) in einem NCO/XH-Verhältnis von 0,95 bis 1,10, einsetzt, wobei XH = OH, $NH_2$ ist und wobei Komponente A) eine flüssige Mischung mit einer Viskosität unter 6000 mPa.s/25°C und einer Gesamtfunktionalität der OH- und $NH_2$-Gruppen zwischen 2,0 und 2,75 aus

A1α durch 5 bis 40 Gew.-% an Polymerisaten und/oder Copolymerisaten von Acrylnitril, Methacrylnitril, Styrol, α-Methystyrol, Acrylsäure-$C_1$—$C_4$-alkylester und/oder Methacrylsäure-$C_1$—$C_4$-alkylester pfropfmodifizierten Propylenoxidpolyolen und/oder mit Ethylenoxid mischpolymerisierten oder mit Ethylenoxidendgruppen modifizierten $C_2/C_3$-Mischpolyetherpolyolen mit einem Gehalt an Ethylenoxidanteilen zwischen 5 und 80 Gew.-%, einem Molekulargewicht zwischen 1000 und 6000 und einer Funktionalität zwischen 2,0 und 3,3 und einer Viskosität unter 6000 mPas/25°C und/oder

A1β durch 5 bis 40 Gew.-% an hochmolekularen Polyaddukten aus Polyisocyanaten und Hydrazin, Hydraziden, Diaminen oder Polykondensaten aus Formaldehyd und Phenolen und/oder Aminen in feindisperser oder gelöster Form modifizierten Propylenoxidpolyolen und/oder mit Ethylenoxid-mischpolymerisierten oder mit Ethylenoxidendgruppenmodifizierten $C_2/C_3$-Mischpolyetherpolyolen mit einem Gehalt an Ethylenoxidanteilen zwischen 5 und 80 Gew.-%, mit einem Molekulargewicht zwischen 1000 und 6000 und einer Funktionalität zwischen 2,0 und 3,3 und einer Viskosität unter 6000 mPas/25°C mit

A2 flüssigen oder niedrigschmelzenden, in A1 löslichen aromatischen Polyaminen mit einem Molekulargewicht unter 500 aus der Reihe der

2,6-Di-($C_1$—$C_4$-)alkyl-1,3-diamino-4-methyl-benzole und/oder 4,6-Di-($C_1$—$C_4$)-alkyl-1,3-diamino-2-methylbenzole oder ihrer Gemische und/oder unsymmetrisch substituierter 4,4'-Diaminodiphenylmethane der allgemeinen Formel

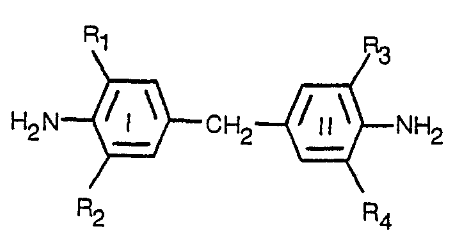

wobei

$R_1$ für Wasserstoff oder eine gegebenenfalls vezweigte Alkylgruppe mit 1 bis 4 C-Atomen,

$R_2$ für eine gegebenenfalls verzweigte Alkylgruppe mit 1 bis 4 C-Atomen,

$R_3$ für Wasserstoff oder eine gegebenenfalls verzweigte Alkylgruppe mit 1 bis 4 C-Atomen und

$R_4$ für eine gegebenenfalls verzweigte Alkylgruppe mit 2 bis 4 C-Atomen steht,

mit der Maßgabe, daß die aromatischen Kerne I und II unterschiedlich substituiert sind oder ihre Produktegemische mitentsprechend symmetrisch alkylsubstituierten 4,4'-Diaminodiphenylmethanen in weniger als 50 Gew.-%-Anteilen

in einem $OH/NH_2$-Verhältnis von A1 zu A2 wie 1:1 bis 1:10, bevorzugt 1:1,1 bis 1:3, und mit A3 aliphatischen tert.-Aminkatalysatoren, vorzugsweisde 1,4-Diaza-(2,2,2)cyclooctan, in Mengen von 0,01 bis 5 Gew.-%, vorzugsweise 0,1 bis 2 Gew.-%, darstellt und als

Komponente B)

flüssige NCO-Voraddukte mit einer NCO-Funktionalität von 2,0 bis 2,55 und einer Viskosität unter 8000 mPas/25°C, vorzugsweise unter 5000 mPas/25°C und besonders bevorzugt unter 3000 mPas/25°C, eingesetzt werden, welche Umsetzungsprodukte von flüssigen, aromatischen Polyisocyanaten, die Phosgenierungsprodukte der Kondensationsprodukte von Anilen und/oder $C_1$—$C_4$-mono- und di-kernalkylierten Anilinen mit Formaldehyd, oder deren bei Raumtemperatur flüssigen Abwandlungsprodukte durch Carbodiimidisierung, Allophanatisierung, Biuretisierung, Trimerisierung oder Modifizierung mit niedermolekularen Polyolen, mit einer Voskosität unter 1000 mPas/25°C darstellen,

mit Polyetherpolyolen des Molekulargewichts 400 bis 7000 in einem NCO/OH-Verhältnis von 2:1 bis 10:1 sind.

Bevorzugt wird eine Verwendung von polyurethanbildenden Ausgangskomponenten, wobei

Komponente A)

eine Mischung mit einer Viskosität unter 4000 mPa.s/25°C, besonders bevorzugt unter 2000 mPa.s/25°C und einer Gesamtfunktionalität der OH- und NH-Gruppen zwischen 2,0 und 2,5 aus

A1 durch 15 bis 40 Gew.-% Polymeristate und Copolymerisate ungesättigter Monomerer, vorzugsweise Acrylnitril, Methacrylnitril, Styrol, α-Methylstyrol, Acryl- und Methacrylsäure-$C_1$—$C_4$-Alkylestern,

-pfropfmodifizierten Polyetherpolyolen mit einem Molekulargewicht zwischen 500 und 8000, vorzugsweise 1000 bis 6000, und einer Funktionalität zwischen 2,0 und 3,3 und einer Viskosität unter 4000 mPa.s./25°C, bevorzugt unter 2000 mPa.s./25°C,

A2 den zuvor genannten, flüssigen oder niederschmelzenden, in 1) löslichen aromatischen Polyaminen mit einem Molekulargewicht unter 500,

mit der Maßgabe, daß die aromatischen Kerne I und II unterschiedlich substituiert sind, oder ihren Mischungen mit entsprechend symmetrisch Alkyl-substituierten 4,4'-Diamino-diphenylmethanen in weniger als 50 Gew.-% Anteilen,

in einem $OH/NH_2$-Verhältnis von 1) zu 2) wie 1:1 bis 1:10 (vorzugsweise 1:1 bis 1:3) und

A3 aliphatischen tert.-Aminkatalysatoren in Mengen von 0,01 bis 5 Gew.-% darstellt, und als

Komponente B)

flüssige aromatische Polyisocyanate mit einer NCO-Funktionalität von 2,0 bis 2,55 und einer Viskosität unter 5000, vorzugsweise unter 3000 mPa.s/25°C, in Form ihrer Umsetzungsprodukte von 2- bis 4-funktionellen Propylenoxid- und/oder Propylenoxid/Ethylenoxid-Mischpolyetherpolyolen des Molekulargewichtsbereichs 500 bis 5000, mit Phosgenierungsprodukten der Kondensationsprodukte von Formaldehyd und Anilen und/oder mono- oder di-kern-$C_1$—$C_4$-alkylierten Anilinen im Molverhältnis von OH/NCO = 1:2 bis 1:10 umgesetzt werden.

Für die durch Polymerisate und/oder Copolymerisate pfropfmodifizierten Polyetherpolyole (A1α) kommen als Polyetherpolyolbasis vorzugsweise Polypropylenoxidpolyole ud/oder mit Ethylenoxid mischpolymerisierte oder mit Ethylenoxidendgruppen modifizierte $C_2/C_3$-Mischpolyetherpolyole in Frage. Der Ethylenoxidanteil kann dabei zwiscehen 5 und 80 Gew.-% betragen, liegt zumeist aber zwischen 5 und 65 Gew.-% bevorzugt zwischen 10 bis 45 Gew.-%. Die OH-Funktionalität beträgt 2 und mehr, vorzugsweise 2 bis 3,3. In Gegenwart dieser Polyether wrden ungesättigte Monomere wie Acrylnitril, Methacrylnitril, Styrol, α-Methylstyrol, Acryl- und/oder Methacrylsäure-$C_1$—$C_4$-alkylester (pfropf)-polymerisiert, wobei Prfropfpolyme4risat- oder -Copolymerisatgehalte von 5 bis 40 Gew.-% bevorzugt, Gehalte von 10 bis 25 Gew.-% besonders bevorzugt werden. Pfropfpolymerisate aus Acrylnitril und Styrol im Monomerenverhältnis 40:60 bis 80:20 sind besonders bevorzugt. Verfahren zur Herstellung derartiger Polymerisatmodifizierter Polyole wrden beispielsweise in den US—PS 3 383 351, 3 304 273, 3 523 093 und 3 110 695, sowie in der DE—B 1 152 536 beschrieben. Die Pfropfpolymerisation kann auch in Gegenwart geringer Mengen an Vinylphosphonsäureestern und/oder OH-funktionellen (Meth)Acrylsäureestern und/ oder OH-funktionellen (Meth)Acrylsäureestern durchgeführt werden.

Das Molekulargewicht dieser Polymerisat-modifizierten Polyether liegt bei 500 bis 8000, bevorzugt bei 1000 6000, ihre Viskosität unter 6000 mPa.s/25°C, bevorzugt unter 4000 mPa.s/25°C, besonders bevorzugt unter 2000 mPa.s/25°C.

Man kann auch Polyetherpolyole (A1 β) einsetzen, welche 5 bis 40 Gew.-%, bevorzugt 10 bis 25 Gew., an hochmolekularen Polyaddukten bzw. Polykondensaten in gelöster oder feindisperser Form enthalten. Derartige modifizierte Polyetherpolyole werden z.B. erhalten, wenn man Polyadditionsreaktionen zwischen Polyisocyanaten und Hydrazin, Hydraziden, Diaminen oder Glykolen, oder auch Polykondensationsreaktionen, z.B. zwischen Formaldehyd und Phenolen und/oder Aminen, in situ in den genannten Polyetherpolyolen ablaufen läßt. Derrartige Verfahren sind beispielsweise in den DE—B 1 168 075 und 1 260 142, sowie in den DE—A 2 324 134, 2 423 984, 2 515 385, 2,513 815, 2 550 796, 2 550 797, 2 550 833, 2 550 862, 2, 550 833, 2 550 862, 2 633 293 und 2 639 254 beschrieben. Es ist aber auch möglich, gemäß US—PS 3 869 413 bzw. DE—A 2 550 864 eine fertige wäßrige Polymerdispersion mit einer Polyhydroxylverbindung zu vermischen und anschließend aus dem Gemisch das Wasser zu entfernen.

Auch hier liegen Funktionalitäten, Molgewichte und Viskositäten im bereits oben angegebenen Bereich. Bevorzug sind jedoch Pfropfpolymerisat-haltige Polyole vom Typ A1 α), da sie relativ stabil sind und bei der Sprüh- und Gießreaktion außerordentlich schnell gelartig erstarren.

Als flüssige oder niederschmelzende, in den Polyolen A/1 lösliche aromatische Polyamine (A2) mit Molgewichten unter 500 verwendet man 2,6-Di-($C_1$—$C_4$-)alkyl-1,3-diamino-4-methyl-benzole und/oder 4,6-Di-($C_1$—$C_4$)alkyl-1,3-diamino-4-methyl-benzole und/oder 4,6-Di-($C_1$—$C_4$)-alkyl-1,3-diamino-2-methylbenzole oder ihre Gemische und/oder unsymmetrisch alkylsubstituierte 4,4'-Diaminodiphenylmethane der allgeinen Formel

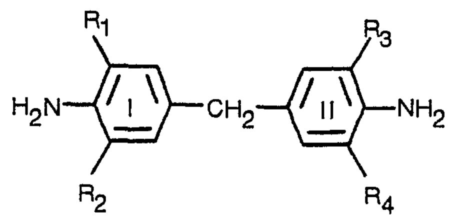

wobei

$R_1$ für Wasserstoff oder eine gegebenenfalls verzweigte Alkylgruppe mit 1 bis 4 C-Atomen,
$R_2$ für eine gegebenenfalls verzweigte Alkylgruppe mit 1 bis 4 C-Atomen,
$R_3$ für Wasserstoff oder eine gegebenenfalls verzweigte Alkylgruppe mit 1 bis 4 C-Atomen und
$R_4$ für eine gegebenenfalls verzweigte Alkylgruppe mit 2 bis 4 C-Atomen steht,

mit der Maßgabe, daß die aromatischen Kerne I und II unterschiedlich substituiert sind, oder ihre Mischungen mit entsprechend symmetrisch alkylsubstituierten 4,4'-Diamono-diphenylmethanen in weniger als 50 Gew.-Anteilen, wie sie bei der Umsetzung von verschiedenen Anilen mit Formaldehyd als Produktgemisch gemäß DE—OS 29 20 501 anfallen.

Ganz besonders bevorzugt verwendet man jedoch 4-Methyl-2,6-diethyl-£1,3-diaminobenzol und/oder 2-Methyl-4,6-diethyl-£1,3-diaminobenzol und/oder 3-Ethyl-3'-isopropyl-4,4'-diamino-diphenylmethan und/ oder 3-Ethyl-3',5'-diethyl-4,4'-diaminodiphenylmethan und/oder 3-Ethyl--3',5'-diisopropyl-4,4'-diaminodiphenylmethan und ganz besonders bevorzugt 3,5-Diethyl-3',5'-diisopropyl-4,4'-diaminodiphenylmethan (bzw. ihre Produktgemische mit symmetrisch alkylsubstituierten Diaminen nach DE—OS 29 20 501), wobei die erst-, zweit- und letzgenannten Diaminoverbindungen bzw. inre Produktgemische besonders günstig sind, da ihre Reaktivität gegenüber unsubstituierten Diaminen wie 2,4-Toluylendiamin oder 4,4'-Diaminodiphenylmethan gebremst und ihre Flüchtigkeiten gering sind. Die rst- und zweitgenannten Diethyltolamine werden dabei vorzugsweise als Isomerenmischungen mit etwa 60 bis 85 Gew.-% der ersten neben ca. 40 bis 15 Gew.-% der zweiten Verbindung eingesetzt.

Diese aromatischen Diamine A—2) vermischt man mit den oben beschriebenen Polymer-modifizierten Polyetherpolyolen (A—1) in einem OH/$NH_2$-Molverhältnis von 1:1 bis 1:10, vorzugsweise von 1:1 bis 1:3.

Als aliphatische tert.-Aminkatalysatoren A3) kann man die an sich bekannten Katalysatoren verwenden, z.B. Triethylamin, Tributylamin, N-Methyl-morpholin, N,N,N',N'-Tetramethyl-ethylendiamin, Pentamethyldiethylentriamin und höhere Homologe (DE—A 2 624 527 und 2 624 528), N-Methyl-N'-dimethylaminoethyl-piperazin, Bis-(dimethylaminoalkyl)-piperazine (DE—A 2 636 787), N,N-Dimethylbenzylamin, N,N-Dimethylcyclohexylamin, Bis-(N,N-diethylaminoethyl)-adipat, N,N-Dimethyl-β-phenylethylamin, 1,2-Dimethylimidazol, 2-Methyl-imidazol, monocyclische und bicyclische Amidine (DE—A 1 720 633), Bis-(di-alkylamino)-alkyl-ether (US—PS 3 330 782, DE—B 1 030 558, DE—A 1 804 361 und 2 618 280) sowie Amidgruppen (vorzugsweise Formamidgruppen) aufweisende tetiäre Amine gemäß den DE—A 2 523 633 und 2 732 292. Als Katalysatoren kommen auch an sich bekannte Mannichbasen aus sekundären Aminen (wie Dimethylamin) und Aldehyden (vorzugsweise Formaldehyd) oder Ketonen (wie Aceton, Methylethylketon oder Cyclohexanon) und Phenolen (wie Phenol, Nonylphenol oder Bisphenol) in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N,N-Dimethyl-ethanolamin, oder deren Umsetzungsprodukte mit Alkylenoxiden wie Propylenoxid und/oder Ethylenoxid.

Ganz besonders bevorzugt ist 1,4-Diaza-(2,2,2)-bicyclo-octan (Dabco®) als Katalysator.

Als Komponente B) kommen die Umsetzungsprodukte von flüssigen, aromatischen Polyisocyanaten mit Polyetherpolyolen c) der Molekulargewichts 400 bis 7000 im NCO/OH-Verhältnis von 2:1 bis 10:1 zum Einsatz.

Alle diese flüssigen Polyisocyanat-Komponenten B) weisen eine Funktionalität von 2,0 bis 2,55 und eine Viskosität unter 8000 MPa.s/25°C, vorzugsweise unter 5000 mPa.s/25°C, besonders bevorzugt unter 3000 mPa.s/25°C, auf.

Als flüssige, aromatische Polyisocyanate kommen Phosgenierungsprodukte von Kondensationsprodukten des Anilens und/oder $C_1$—$C_4$-mono- und di-kernalkylierter Aniline mit Formaldehyd in Frage. Ferner werden bei Raumtemperatur flüssige Abwandlungsprodukte durch Carbodiimidisierung, Allophanatisierung, Biuretisierung, Trimesierung oder Modifizierung it niedermolekularen Polyolen mit Vorteil verwendet.

Bevorzugt sind Phosgenierungsprodukte der Umsetzungsprodukte des Anilins und Formaldehyds mit einem Gehalt von mehr als 20 Gew.-%, vorzugsweise zwischen 30 bis 50 Gew.-%, an 2,4'-Isomeren des Diisocyanatodiphenylmethans, welche flüssig sind. Neben 4,4'-Isomeren können sie auch geringe (bis etwa 7%) Anteile 2,2'-Isomere und evtl. Mehrkernpolyisocyanate enthalten. Ihre Viskosität liegt unter 1000 mPa.s/25°C, bevorzugt unter 750 mPa.s/25°C und kann noch deutlich tiefer bei flüssigen Isocyanaten, z.B. dem 2,4'-Diisocyanatodiphenylmethan, liegen.

Unter den NCO-Voraddukten B) sind Umsetzungsprodukte von 2- bis 4- funktionellen Propylenoxidpolyetherpolyolen c), welche gegebenenfalls bis 5 bis 65 Gew.-% Ethylenoxid enthalten können und ein Molekulargewicht von 400 bis 7000, vorzugsweise 50 bis 5000 aufweisen, mit den flüssigen Isomerenmischungen von Diphenylmethandiisocyanaten mit mehr als 20 Gew.-%, vorzugsweise 30 bis 50 Gew.-% an 2,4'-Isomeren des Diisocyanatodipenylmethans neben 4,4'-Isomeren und gegebenenfalls bis zu 7 Gew.-% 2,2'-Isomeren, bevorzugt.

Die Umsetzung nimmt man in einem CO/OH-Verhältnis von 2:1 bis 10:1, vorzugsweise 2,5:1 bis 6:1 vor. Auch diese NCO-Präpolymeren solen eine Funktionalität von 2 bis 2,55 und eine Viskosität unter 8000 mPa.s/25°C, vorzugsweise unter 5000 mPa.s./25°C, aufweisen.

Ganz besonders bevorzugt setzt man als NCO-Voraddukte Umsetzungsprodukte aus etwa 2 bis 2,5-funktionellen Polypropylenoxidglykolen mit einem Molekulargewicht von 1500 bis 2500 mit einem rohen Diphenylmethandiisocyanatgemisch mit etwa 30 bis 50 Gew.-% 2,4'-Isomeren (neben überwiegend 4,4'-Isomeren) ein.

Die Vermischung der erfindungsgemäßen, polyurethanbildenden Komponenten erfolgt zweckmäßigerweise mit einem Zweikomponenten-Dosier- und Mischaggregat, bei dem die Reaktionskomponenten getrennt in einen Mischkopft gefördert werden, wo sie entweder durch einen rührer, Staticmischer oder durch Gegenstrom-Injektion vermischt und anschließend mit oder ohne Luftunterstüzung ausgetragen werden. Die Dosierung der Reaktionskomponenten erfolgt vorzugsweise mit Hilfe von Zahnradpumpen oder mit doppelt wirkenden Tauchkolbenpumpen. Bei der Verwendung von Tauchkolbenpumpen in Kombination mit Static-Mischer kann die Austragung des Rekationsgemisches nach dem Sprühverfahren aufgrund der hohen Materialdrücke auch ohne Luftunterstützung (airless) vorgenommen werden. Das Reaktionsgemisch verfestigt sich ca. 10 bis 12 sec nach Austragung. Beim Sprühen gegen senkrechte Flächen zwigt das Material einen glatten Verlauf. Tropfenbildung innerhalb der Verfestigungsphase tritt bei normaler Andwendung nicht auf.

Die erfindungsgemäßen Materialien werden zur Herstellung von verschleißfesten, abdichtenden und korrosionsbeständigen, elastischen Überzügen, Beschichtungen, Zwischenschichten und Unterschichten oder elastischen Sperrschichten auf Metallen, Kuntstoffen und gegebenenfalls porigen Kunststoffen, oder auch Beton, Estrich, Holz, Mauerwerk und natürlichem Gestein verwendet.

Als Kunststoffe sind beispielsweise Polymerisate, wie Polyethylen, Polypropylen, EPDM, Polystyrol, ABS-Polymerisate oder Polykondensate wie Polyamide, Polyester, Polysulfide oder Polyether oder Phenol- und Amin-formaldehydharze, Epoxid- oder UP-Harze, sowie Schaumstoffe, auf z.B. Polyurethan-, Polystyrol-, Polyethylen- oder Polyamidbasis, geeignet.

Anwendungsbeispiele sind die Beschichtung und gegebenenfalls Abdichtung von großflächigen Metallteilen wie Beschichtung von Stahlspundwänden, Schiffsdecks oder Ladeluken, von Waggons, Bunkern, Loren, Siebkammern, Seitenteilen von Schwingrinnen, Suspensionsabscheidern (Hydrocyclone), Rutschen, Förderrinnen, Behältern aller Art (z.B. für den Transport von korrosiv wirkenden Flüssigkeiten oder Schüttgütern), schalldämpfende Außenbeschichtung der Trommel von Müllfahrzeugen, verschleißfeste Beschichtung Schüttrinnen zur Entleerung von Fertigbeton-Fahrzeugen, Beschichtung von Blechdächern und Flachdächern und dergleichen.

Wichtig ist die Anwendung für Rohr-innen- und -außenbeschichtung. Füllstoffhaltige Massen können auch in Form rutschfester Beläge, z.B. für Trittstiege, Schiffsdecke, Arbeitsbühnen etc. verwendet werden.

Polyurethan- oder Polyethylenschaumstoffe können z.B. mit einer Außenhaut versehen werden.

Von besonderer Bedeutung ist die Applikation der polyurethanbildenden Komponenten nach dem Sprühverfahren auf Estrich und (Stahl)Beton zur Erzielung einer nahtlosen, elastischen, Abdichtung, wodurch das Einidringen von stark korrosiv wirkenden Substanzen verhindert wird. Aufgrund der hohen Elastizität und Dehnung des erfindungsgemäßen Polyurethanelastomeren über einen relativ großen Außentemperaturbereich ist die Abdichtungsfunktion selbst bei starken Temperaturschwankungen gewährleistet. Außerdem tritt infolge der schnellen Verfestigung des Reaktionsgemisches keine Kapillarbildung durch aus dem Untergrund aufsteigende Gase (Luft, Wasserdampf) auf. Aufgrund dieser Eigenschaften weist das erfindungsgemäße Polyurethanelastomere für die Abdichtung von Stahlbetonbbauwerken, wie z.B. Flachdächern, Kuppeln, Auffahrten, Balkonen und anderen Ingeneurbauwerken gegenüber herkömmlichen Materialien, wie die in der US—PS 3 723 163 und in der DE—A 2 051 956 beschriebenen, langsam aushärtenden Polyurethan-Kombinationen, deren Verarbeitung infolge mehrschichtiger Aufbauzeit aufwendig und stark wetterabhängig ist, besondere Vorteile auf.

Außerdem kommt die Beschichtung zur Abdichtung von Beton-Flachdächern und -Zwischendecken insbesondere bei Naßräumen (unter dem Estrich) in Betracht.

Beispiel 1

Komponente A)

1)

80 Gew.-Teile eines Polyethers, der durch Anlagerung von Propylenoxid und Ethylenoxid (80:20) an Trimethylolpropan (Mol-Gewicht ca. 4800) entstanden ist, und in den vorher unter den Bedingungen der Pfropfpolymerisation ein Gemisch von Styrol/Acrylnitril im Gewichtsverhältnis 20:80 umgesetzt wurde, so daß ein Pfropfanteil von 20 Gew.-% entsteht; Viskosität des so modifizierten Polyols = 3000 mPa.s/20°C, OH-Zahl 28.

2)

20 Gew.-Teile eines Isomerengemisches aus 3,5-Diethyl-3',5'-diisopropyl-4,4'-diaminodiphenylmethan, 3,3',5',5'-Tetraethyl-4,4'-diaminodiphenylmethan und 3,3',5,5'-Tetraisopropyl-4,4'-diaminodiphenylmethan (56:22:22).

3)

0,1 Gew.-Teil 1,4-Diaza-(2,2,2)-bicyclooctan.

Die Komponenten A/1-3) werden verrührt.

Komponente B)

Komponente B) ist ein NCO-Voraddukt (Viskosität 3100 mPa.s/20°C], das erhalten wird durch Umsetrzung von

62 Gew.-Teilen eines Polyisocyanates (hergestellt durch Phosgenierung von Kondensationsprodukten aus Anilin und Formaldehyd (mit 40 Gew.-% 2,4'-Isomeren, einem NCO-Gehalt von 31,5% und einer Viskosität von 50 mPa.s/20°C)) mit

100 Gew.-Teilen eines Polyols, das erhalten wird durch Anlagerung von Propylenoxid an Propylenglykol (Mol-Gewicht 2000), so daß ein Isocyanatgehalt von 10 Gew.-% im NCO-Voraddukt entsteht.

74 Gew.-Teile der Komponente B) werden mit

100 Gew.-Teilen der Komponente A) innig vermischt.

Diese Vermischung geschieht zweckmäßigerweise mit einem Zweikomponenten-Dosier- und Mischaggregat, bei dem die Reaktionskomponenten getrennt in einen Mischkopf gefördert werden, wo sie entweder durch einen Rührer oder Static-Mischer vermischt und anschließend ausgetragen werden. Das Reaktionsgemisch verfestigt sich 15 sec nach Austragung des Gemischs. Bei Sprühen gegen senkrechte Metallflächen zeigt das Material einen glatten Verlauf, Tropfenbildung innerhalb der Verfestigungsphase tritt bei normaler Anwendung nicht auf.

Mechanische Eigenschaften siehe Tabelle.

Beispiel 2

Es wird wie in Beispiel 1 verfahren, jedoch wird anstelle des Styrol/Acrylnitril-Pfropfpolyethers ein Polyhydrazodicarbonamid-modifiziertes Polyol mit einem Füllstoffgehalt von 20 Gew.-% und einer OH-Zahl 28 verwendet. Es wurde durch Umsetzung eines Polyethers, der durch Anlagerung von Propylen- und Ethylenoxid an Trimethylolpropan entstanden ist, mit Hydrazin und Toluylendiisocyanat in etwa äquivalenten Mengen erhalten.

Mechanische Eigenschaften siehe Tabelle.

Beispiel 3

Komponente A)

1)

80 Gew.-Teile eines Polyhydrazodicarbonamid-modifizierten Polyols mit einem Füllstoffgehalt von 20 Gew.-% und einer OH-Zahl 28 nach Beispiel 2.

2)

20 Gew.-Teile 4-Methyl-2,6-diethyl-1,3-diaminobenzol und 2-Methyl-4,6-diethyl-1,3-diaminobenzol-Gemisch (65:35).

3)

0,1 Gew.-Teil 1,4-Diaza-(2,2,2)-bicyclooctan.

Die Komponenten A/1—3) werden verrührt.

Komponente B)

Komponente B) ist ein NCO-Voraddukt (Viskosität 3100 mPa.s/20°C), das erhalten wird durch Umsetzung von

62 Gew.-Teilen eines Polyisocyanates (hergestellt durch Phosgenierung von Kondensationsprodukten aus Anilin und Formaldehyd (mit 40 Gew.-% 2,4'-Isomeren, einem NCO-Gehalt von 31,5% und einer Viskosität von 50 mPa.s/20°C)) mit

100 Gew.-Teilen eines Polyols, das erhalten wird durch Anlagerung von Propylenoxid an Propylenglykol (Mol-Gewicht 2000), so daß ein Isocyanatgehalt von 10 Gew.-% im NCO-Voraddukt entsteht.

122 Gew.-Teile der Komponente B) werden mit

100 Gew.-Teilen der Komponente A) innig vermischt.

Diese Vermischung geschieht zweckmäßigerweise mit einem Zweikomponenten-Dosier- und Mischaggregat, bei dem die Reaktionskomponenten getrennt in einen Mischkopf gefördert werden, wo sie entweder durch einen Rührer oder Static-Mischer vermischt und anbschließend ausgetragen werden. Das Reaktionsgemisch verfestigt sich 15 sec nach Austragung des Gemischs. Beim Sprühen gegen senkrechte Metallflächen zeigt das Material einen glatten Verlauf, Tropfenbildung innerhalb der Verfestigungsphase tritt bei normaler Anwendung nicht auf.

Mechanische Eigenschaften siehe Tabelle.

Beispiel 4 (Vergleich gegen Beispiele 1 und 2)

Komponente A)

1)

80 Gew.-Teile eines Polyethers, der durch Anlagerung von Propylenoxid und Ethylenoxid an Trimethylolpropan entstanden ist (Mol-Gewicht ca. 4800, OH-Zahl 35).

2)

20 Gew.-Teile des Amingemisches von Beispiel 1), A/2.

3)

0,2 Gew.-Teile 1,4-Diaza-(2,2,2)-bicyclooctan, 0,2 Gew.-Teile eines 1:1-Komplexes aus 1,2-Dimethylhexahydropyrimidin und Dibutyl-zinndilaurat.

Die Komponenten A/1-3) werden verrührt.

Komponente B)

Komponente B) ist das in Beispiel 1 beschriebene NCO-Voraddukt mit einem Isocyanatgehalt von 10 Gew.-%.

77 Gew.-Teile der Komponente B) werden mit 100 Gew.-Teilen der Komponente A) innig vermischt.

Mechanische Eigenschaften siehe Tabelle.

Mechanische Eigenschaften
(gemessen an 4 mm starken Schichten)

| | | Beispiele 1—3 (erfindungsgemäß) | Vergleichsbeispiel 4 (einfacher Polyether) |
|---|---|---|---|
| Dichte | (DIN 53473; kg/m$^3$) | 800—1000 | 800 |
| Shore-Härte A | (DIN 53505) | 65—85 | 55 |
| Zugfestigkeit | (DIN 53504; MPa) | 8—12 | 4,5 |
| Modul 100% | (DIN 53504; MPa) | 8—5,1 | 1,9 |
| Modul 300% | (DIN 53504; MPa) | 7—9,1 | 3,8 |
| Reißdehnung | (DIN 53504; %) | 300—400 | 383 |
| Weiterreißfestigkeit | (DIN 53515; kN/m) | 14—25 | 8,7 |
| Abriebverlust | (DIN 53516; mg) | 130—180 | 543 |

**Patentansprüche**

1. Verwendung von polyurethanbildenden Komponenten zum Aufbau hydrolysenfester, tieftemperaturbeständiger und elastischer Polyetherurethane hoher Fetigkeit und Abriebfestigkeit zur korrosionshemmenden, verschleißschützenden Beschichtun von Metall- und Kunststoff-flächen und -formkörpern sowie Mauerwerk, Estrich, Stahlbeton und natürlichem Gestein durch Gieß oder

Sprühauftrag der polyurethanbildenden Komponenten mittels Mehrkomponenten-Dosier- und -Mischaggregaten, dadurch gekennzeichnet, daß man als kalt zu verarbeitende, kalthärtende, schnell gelierende, lösungsmittelfreie, flüssige polyurethanbildende Kompnenten eine Polyol/Polyamin/tert.-Aminkatalysator-Komponente A) und eine Polyisocyanat-Komponente B) in einem NCO/XH-Verhältnis von 0,95 bis 1,10, einsetzt, wobei XH = OH, $NH_2$ ist und wobei Komponente A) eine flüssige Mischung mit einer Viskosität unter 6000 mPa.s/25°C und einer Gesamtfunktionalität der OH- und $NH_2$-Gruppen zwischen 2,0 und 2,75 aus

A1α durch 5 bis 40 Gew.-% an Polymerisaten und/oder Copolymerisaten von Acrylnitril, Methacrylnitril, Styrol, α-Methystyrol, Acrylsäure-$C_1$—$C_4$-alkylester und/oder Methacrylsäure-$C_1$—$C_4$-alkylester pfropfmodifizierten Propylenoxidpolyolen und/oder mit Ethylenoxid mischpolymerisierten oder mit Ethylenoxidendgruppen modifizierten $C_2$/$C_3$-Mischpolyetherpolyolen mit einem Gehalt an Ethylenoxidanteilen zwischen 5 und 80 Gew.-%, einem Molekulargewicht zwischen 1000 und 6000 und einer Funktionalität zwischen 2,0 und 3,3 und einer Viskosität unter 6000 mPas/25°C und/oder

A1β durch 5 bis 40 Gew.-% an hochmolekularen Polyaddukten aus Polyisocyanaten und Hydrazin, Hydraziden, Diaminen oder Polykondensaten aus Formaldehyd und Phenolen und/oder Aminen in feindisperser oder gelöster Form modifizierten Propylenoxidpolyolen und/oder mit Ethylenoxid-mischpolymerisierten oder mit Ethylenoxidendgruppenmodifizierten $C_2$/$C_3$-Mischpolyetherpolyolen mit einem Gehalt an Ethylenoxidanteilen zwischen 5 und 80 Gew.-%, mit einem Molekulargewicht zwischen 1000 und 6000 und einer Funktionalität zwischen 2,0 und 3,3 und einer Viskosität unter 6000 mPas/25°C mit

A2 flüssigen oder niedrigschmelzenden, in A1 löslichen aromatischen Polyaminen mit einem Molekulargewicht unter 500 aus der Reihe der

2,6-Di-($C_1$—$C_4$-)alkyl-1,3-diamino-4-methyl-benzole und/oder 4,6-Di-($C_1$—$C_4$)-alkyl-1,3-diamino-2-methylbenzole oder ihrer Gemische und/oder unsymmetrisch substituierter 4,4'-Diaminodiphenylmethane der allgemeinen Formel

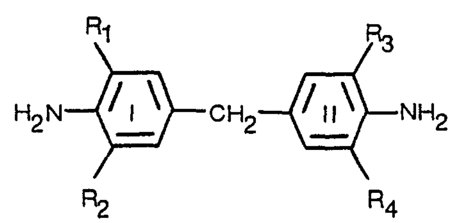

wobei

$R_1$ für Wasserstoff oder eine gegebenenfalls verzweigte Alkylgruppe mit 1 bis 4 C-Atomen,

$R_2$ für eine gegebenenfalls verzweigte Alkylgruppe mit 1 bis 4 C-Atomen,

$R_3$ für Wasserstoff oder eine gegebenenfalls verzweigte Alkylgruppe mit 1 bis 4 C-Atomen und

$R_4$ für eine gegebenenfalls verzweigte Alkylgruppe mit 2 bis 4 C-Atomen steht,

mit der Maßgabe, daß die aromatischen Kerne I und II unterschiedlich substiuiert sind oder ihre Produktgemische mit entsprechend symmetrisch alkylsubstituierten 4,4'-Diaminodiphenylmethanen in weniger als 50 Gew.-%-Anteilen einem OH/$NH_2$-Verhältnis von A1 zu A2 wie 1:1 bis 1:10, und mit

A3 aliphatischen tert.-Aminkatalysatoren in mengen von 0,01 bis 5 Gew.-%. darstellt und als Komponente B)

flüssige NCO-Voraddukte mit einer NCO-Funktionalität von 2,0 bis 2,55 und einer Viskosität unter 8000 mPas/25°C eingesetzt werden, welche Umsetzungsprodukte von flüssigen, aromatischen Polyisocyanaten, die Phosgenierungsprodukte der Kondensationsprodukte von Anilin und/oder $C_1$—$C_4$-mono- und di-kernalkylierten anilinen mit Formaldehyd, oder deren bei Raumtemperatur

flüsigen Abwandlungs produkte durch Carbodiimidisierung, Allphanatisierung, Biuretisierung, Trimerisierung oder Modifizierung mit niedermolekularen Polyolen, mit einer Viskosität unter 1000 mPas/25°C darstellen,

mit Polyetherpolyolen des Molekulargewichts 400 bis 7000

in einem NCO/OH-Verhältnis von 2:1 bis 10:1 sind.

2. Verwendung nach Anspruch 1, wobei die Komponente A1α durch Propfpolymerisate aus Acrylnitril und Styrol im Monomerenverhältnis 40:60 bis 80:20 modifizierte Polyetherpolyole darstellt.

3. Verwendung nach Ansprüchen 1 und 2, wobei aromatischen Polyamine A2)

Isomerengemische von 4-Methyl-2,6-diethyl-1,3-diamino-benzol und 2-Methyl-4,6-diethyl-1,3-diamino-benzol und/oder 3-Ethyl-3'-isopropyl-4,4'-dimino-diphenylmethan und/oder 3-Ethyl-3',5'-diethyl-4,l4'-diaminodiphenylmethan und/oder 3-Ethyl-3,5'-diisopropyl-4,4'-diamino-diphenylmethan und/oder 3,5-Diethyl-3',5'-diisopropyl-4,4'-diaminodiphenylmethan, gegebenenfalls in Mischungen bis zu 50 Gew.-% der entsprechenden, symmetrischen, alkylsubstituierten 4,4'-Diaminodipenylmethanen darstellen.

4. Verwendung nach Ansprüchen 1 bis 3, dadurch gekennzeichnet, daß die Polyamine A2) Isomerengemische aus 60 bis 85 Gew.-% 4-Methyl-2,6-di-ethyl-1,3-diaminobenzol und 40 bis 15 Gew.-% 2-Methyl-4,6-diethyl-1,3-diaminobenzol darstellen.

5. Verwendung nach Ansprüchen 1 bis 4, dadurch gekennzeichnet, daß man als Komponente B) Umsetzungsprodukte von 2—4 funktionellen Prpylenoxidpolyetherpolyolen, welche gegebenenfalls 5 bis

65 Gew.-% Ethylenoxid enthalten, und ein Molekulargewicht von 500 bis 5000 aufweisen, mit Phosgenierungsprodukten von Kondensationsprodukten des anilins mit Formaldehyd mit einem Gehalt von mehr als 20 Gew.-% an 2,4'-Isomeren des Diphenylmethan-diisocyanats neben 4,4'-Isomeren und gegebenenfalls bis zu 7 Gew.-% 2,2'-Isomeren in einem NCO/OH-Verhältnis von 2:1 bis 10:1 einsetzt.

6. Verwendung nach Ansprüche 1 bis 5, dadurch gekennzeichnet, daß man als Komponente B) ein Umsetzungsprodukt aus einem 2- bis 2,5-funktionellen Polypropylenetherpolyol vom Molekulargewicht 1500 bis 2500 und einem Diphenylmethandiisocyanatgemisch mit 30 bis 50 Gew.-% an 2,4'-Isomeren neben überwiegend 4,4'-Isomeren einsetzt.

## Revendications

1. Utilisation de composants générateurs de polyuréthanne pour l'édification de polyéther-uréthannes résistants à l'hydrolyse, stables aux basses températures et élastiques, de grand solidité et de grande résistance à l'usure par frottement pour le revêtement anti-corrosif protégeant de l'usure des surfaces et des pièces moulées en métal et matière plastique ainsi qu'un ouvrage de maçonnerie, une aire en ciment, le béton armé et la roche naturelle par application par coulée ou par pulvérisation des composants générateurs de polyuréthanne au moyen d'appareils pour le dosage et le mélange de plusieurs composants, caractérisée en ce qu'on utilise comme composants liquides générateurs de polyuréthanne sans solvants, se gélifiant rapidement, durcissant à froid et pouvant être mis en oeuvre à froid,

un composant A) polyol/polyamine/catalyseur du type amine tertiaire et

un composant B) polyisocyanate

dans un rapport NCO/XH de 0,95 à 1,10,

XH représentant OH, $NH_2$ et

le composant A) étant

un mélange liquide ayant une viscosité inférieure à 6000 mPa.s/25°C et une fonctionnalité totale des groupes OH et $NH_2$ comprise entre 2,0 et 2,75, constitué

A1α de propylèneoxyde-polyols modifiés par greffage par 5 à 40% en poids de polymères et/ou de copolymères d'acrylonitrile, de méthacrylonitrile, de styrène, d'α-méthylstyrène, d'un ester d'alkyle en $C_1$ à $C_4$ d'acide acrylique et/ou d'un ester d'alkyle en $C_1$ à $C_4$ d'acide méthacrylique et/ou de copolyéther-polyols en $C_2/C_3$ copolymérisés avec l'oxyde d'éthylène ou modifiés par des groupes terminaux éthylèneoxyde avec une teneur en portions éthylèneoxyde comprise entre 5 et 80% en poids, un poids moléculaire compris entre 1000 et 6000 et une fonctionnalité comprise entre 2,0 et 3,3, et une viscosité inférieure à 6000 mPas/25°C et/ou

A1β de propylèneoxyde-polyols modifiés par 5 à 40% en poids de produits de polyaddition de haut poids moléculaire de polyisocyanates et d'hydrazine, d'hydrazides, de diamines ou de polycondensats de formaldéhyde et de phénols et/ou d'amines sous une forme finement dispersée ou dissoute, et/ou de copolyéthers-polyols en $C_2/C_3$ copolymérisés avec de l'oxyde d'éthylène ou modifiés avec des groupes éthylèneoxyde terminaux avec une teneur en portions éthylèneoxyde comprise entre 5 et 80% en poids, un poids moléculaire compris entre 1000 et 6000 et une fonctionnalité comprise entre 2,0 et 3,3, et une viscosité inférieure à 6000 mPas/25°C, avec

A2 des polyamines aromatiques liquides ou fondant à basse température, solubles dans A1, avec un poids moléculaire inférieur à 500, de la série des 2,6-di(alkyle en $C_1$ à $C_4$)-1,3-diamino-4-méthylbenzènes et/ou des 4,6-di-(alkyle en $C_1$ à $C_4$)-1,3-diamino-2-méthylbenzènes ou leurs mélanges et/ou de 4,4'-diaminodiphénylméthanes à substitution disymétrique de formule générale

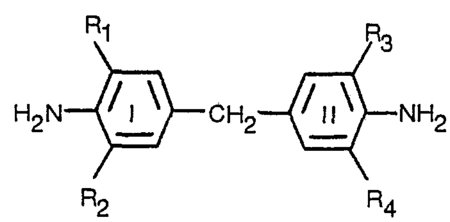

où

$R_1$ désigne l'hydrogène ou un groupe alkyle éventuellement ramifié ayant 1 à 4 atomes de carbone,

$R_2$ est un groupe alkyle éventuellement ramifié ayant 1 à 4 atomes de carbone,

$R_3$ est l'hydrogène ou un groupe alkyle éventuellement ramifié ayant 1 à 4 atomes de carbone et

$R_4$ est un groupe alkyle éventuellement ramifié ayant 2 à 4 atomes de carbone,

sous réserve que les noyaux aromatiques I et II soient différemment substitués ou que leurs mélanges avec des 4,4'-diaminodiphénylméthanes à substitution alkyle symétrique correspondante en proportions de moins de 50% en poids soit dans un rapport $OH/NH_2$ de A1 à A2 allant de 1:1 à 1:10 et avec

A3 des catalyseurs formés d'amines tertiaires aliphatiques en quantités de 0,01 à 5% en poids et on utilise comme composant B) des produits liquides de préaddition de NCO ayant une fonctionnalité NCO de 2,0 à 2,55 et une viscosité de 8000 mPas/25°C, qui sont des produits de réaction de polyisocyanates aromatiques liquides qui constituent des produits de phosgénation des produits de condensation de

l'aniline et/ou d'anilines monoalkylées et dialkylées sur le noyau par des groupes alkyle en $C_1$ à $C_4$ avec le formaldéhyde, ou leurs produits liquides de transformation à la température ambiante par introduction de groupes carbodiimide, allophanate, biuret, par trimérisation ou par modification avec des polyols de bas poids moléculaire ayant une viscosité inférieur à 1000 mPas/25°C, avec des polyéther-polyols de poids moléculaire allant de 400 à 7000 dans un rapport NCO/OH de 2:1 à 10:1.

2. Utilisation suivant la revendication 1, dans laquelle le composant A1α représenté des polyéther-polyols modifiés par des polymères greffés d'acrylonitrile et de styrène dans un rapport des monomères de 40:60 à 80:20.

3. Utilisation suivant les revendications 1 et 2, dans laquelle les polyamines aromatiques A 2) sont des mélanges d'isomères du 4-méthyl-2,6-diéthyl-1,3-diaminobenzène et du 2-méthyl-4,6-diéthyl-1,3-diaminobenzène et/ou du 3-éthyl-3'-isopropyl-4,4'-diaminodiphénylméthane et/ou du 3-éthyl-3',5'-diéthyl-4,4'-diaminodiphénylméthane et/ou du 3-éthyl-3,5'-diisopropyl-4,4'-diaminodiphénylméthane et/ou du 3,5-diéthyl-3',5'-diisopropyl-4,4'-diaminodiphénylméthane, éventuellement en mélanges avec jusqu'à 50% en poids des 4,4'-diaminodiphénylméthanes alkylés symétriques correspondants.

4. Utilisation suivant les revendications 1 à 33, caractérisée en ce que les polyamines A2) sont des mélanges d'isomères de 60 à 85% en poids de 4-méthyl-2,6-di-éthyl-1,3-diaminobenzène et de 40 à 15% en poids de 2-méthyl-4,6-diéthyl-1,3-diaminobenzène.

5. Utilisation suivant les revendications 1 à 4, caractérisée en ce qu'on utilise comme composant B) des produits de réaction de propylèneoxyde-polyétherpolyols de fonctionnalité égale à 2—4, qui contiennent éventuellement 5 à 65% en poids d'oxyde d'éthylène et qui ont un poids moléculaire de 500 à 5000, avec des produits de phosgénation de produits de condensation de l'aniline avec le formaldéhyde, avec une teneur de plus de 20% en poids d'isomères 2,4' du diisocyanatodiphénylméthane à côté de 4,4'-isomères et le cas échéant jusqu'à 7% en poids de 2,2'-isomères dans un rapport NCO/OH de 2:1 à 10:1.

6. Utilisation suivant les revendications 1 à 5, caractérisée en ce qu'on utilise comme composant B) un produit de réaction d'un polypropylène-étherpolyol de fonctionalité allant de 2 à 2,5 d'un poids moléculaire de 1500 à 2500 et d'un mélange de diisocyanatodiphénylméthanes avec 30 à 50% en poids d'isomères 2,4' avec une proportion dominante d'isomères 4,4'.

**Claims**

1. Use of polyurethane-forming components for synthesising hydrolysis-resistant, low-temperature-resistant and elastic polyether urethanes of high strength and abrasion resistance for the corrosion-inhibiting, wear-preventing coating of metal and plastic surfaces and mouldings as well as masonry, screed, steel-reinforced concrete and natural stone by casting or spraying on the polyurethane-forming components by means of multi-component metering and mixing units, characterised in that a polyol/polyamine/tert.-amine catalyst component A) and a polyisocyanate component B), in an NCO/XH ratio of 0.95 to 1.10, wherein XH = OH, $NH_2$, are used as the cold-hardening, quick-gelling, solvent-free, liquid polyurethane-forming components which are to be cold-processed, component A) being a liquid mixture, with a viscosity below 6000 mPa.s./25°C and a total functionality of the OH and $NH_2$ groups of between 2.0 and 2.75, of

A1α propylene oxide polyols and/or $C_2/C_3$-mixed polyether polyols copolymerised with ethylene oxide or modified with ethylene oxide and groups and having ethylene oxide contents of between 5 and 80% by weight, which are graft-modified by 5 to 40% by weight of polymers and/or copolymers of acrylonitrile, methacrylonitrile, styrene, α-methylstyrene, acrylic acid $C_1$—$C_4$-alkyl ester and/or methacrylic acid $C_1$—$C_4$-alkyl ester, have a molecular weight of between 1000 and 6000 and a functionality of between 2.0 and 3.3 and a viscosity of below 6000 mPas/25°C and/or

A1β propylene oxide polyols and/or $C_2/C_3$-mixed polyether polyols copolymerised with ethylene oxide or modified with ethylene oxide and groups and having ethylene oxide contents of between 5 and 80% by weight, which are modified by 5 to 40% by weight of high molecular weight polyadducts of polyisocyanates and hydrazine, hydrazides, diamines or polycondensates of formaldehyde and phenols and/or amines in a finely dispersed or dissolved form, have a molecular weight of between 1000 and 6000 and a functionality of between 2.0 and 3.3 and a viscosity of below 6000 mPas/25°C with

A2 liquid or low-melting aromatic polyamines which are soluble in A1 and have a molecular weight of below 500 from the series comprising 2,6-di-($C_1$—$C_4$—)alkyl-1,3-diamino-4-methyl-benzenes and/or 4,6-di-($C_1$—$C_4$)-alkyl-1,3-diamino-2-methyl-benzenes or mixtures thereof and/or asymmetrically substituted 4,4'-diamino-diphenylmethanes of the general formula

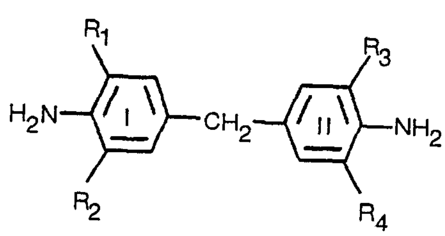

wherein

$R_1$ represents hydrogen or an optionally branched alkyl group with 1 to 4 C atoms,

$R_2$ represents an optionally branched alkyl group with 1 to 4 C atoms,

$R_3$ represents hydrogen or an optionally branched alkyl group with 1 to 4 C atoms and

$R_4$ represents an optionally branched alkyl group with 2 to 4 C atoms,

with the proviso that the aromatic nuclei I and II are differently substituted, or their product mixtures with correspondingly symmetrically alkyl-substituted 4,4'-diaminodiphenylmethanes in less than 50% by weight proportions,

in an $OH/NH_2$ ratio of A1 to A2 of 1:1 to 1:10, and with

A3 aliphatic tert.-amine catalysts in quantities of 0.01 to 5% by weight; and

liquid NCO preadducts with an NCO functionality of 2.0 to 2.55 and a viscosity of below 8000 mPas/25°C, which are reaction products of liquid, aromatic polyisocyanates, which are phosgenation products of the condensation products of aniline and/or $C_1$—$C_4$-mono- and di-nucleus-alkylated anilines with formaldehyde, or their modification products by carbodiimidisation, allophanatisation, biuretisation, trimerisation or modifiction with low molecular weight polyols, these modification products being liquid at room temperature, and have a viscosity of below 1000 mPas/25°C, with polyether polyols of a molecular weight of 400 to 1000 in an NCO/OH ratio of 2:1 to 10:1, are used as component B).

2. Use according to Claim 1, wherein component A1α represents polyether polyols which are modified by graft polymers of acrylonitrile and styrene in a monomer ratio of 40:60 to 80:20.

3. Use according to Claims 1 and 2, wherein aromatic polyamines A2) are isomer mixtures of 4-methyl-2,6-diethyl-1,3-diamino-benzene and 2-methyl-4,6-diethyl-1,3-diaminobenzene and/or 3-ethyl-3'-isopropyl-4,4'-diamino-diphenylmethane and/or 3-ethyl-3',5'-diethyl-4,4'-diaminodiphenylmethane and/or 3-ethyl-3,5'-diisopropyl-4,4'-diamino-diphenylmethane and/or 3,5-diethyl-3',5'-diisopropyl-4,4'-diamino-diphenylmethane, optionally in admixture with up to 50% by weight of the corresponding, symmetrical, alkyl-substituted 4,4'-diaminodiphenylmethanes.

4. Use according to Claims 1 to 3, characterised in that the polyamines A2) are isomer mixtures of 60 to 85% by weight of 4-methyl-2,6-di-ethyl-1,3-diaminobenzene and 40 to 15% by weight of 2-methyl-4,6-diethyl-1,3-diaminobenzene.

5. Use according to Claims 1 to 4, characterised in that reaction products of 2—4 functional propylene oxide polyether polyols, which optionally contain 5 to 65% by weight of ethylene oxide, and have a molecular weight of 500 to 5000, with phosgenation products of condensation products of aniline with formaldehyde with a content of more than 20% by weight of 2,4'-isomers of diphenylmethane diisocyanate in addition to 4,4'-isomers and optionally up to 7% by weight of 2,2'-isomers in an NCO/OH ratio of 2:1 to 10:1 are used as component B).

6. Use according to Claims 1 to 5, characterised in that a reaction product of a 2- to 2,5-functional polypropylene ether polyol of a moleucular weight of 1500 to 2500 and a diphenylmethane diisocyanate mixture containing 30 to 50% by weight of 2,4'-isomers in addition to a predominant content of 4,4'-isomers is used as component B).